# FASCICULE DE BREVET EUROPEEN

(11) **EP 2 273 294 B1**
(45) Date de publication et mention de la délivrance du brevet: **15.11.2017**
(21) Numéro de dépôt: 10168387.8
(22) Date de dépôt: 05.07.2010
(51) Int. Cl.: G02B 6/44

(54) **Boîtier de raccordement de fibres optiques**
Verbindungsgehäuse für optische Fasern
Connecting housing for optical fibres

(30) Priorité: 09.07.2009 FR 0954772
(43) Date de publication de la demande: 12.01.2011
(73) Titulaire: Nexans, 92400 Courbevoie (FR)
(72) Inventeur: Apere, Rodolphe, 78570 ANDRESY (FR)
(74) Mandataire: Gauer, Pierre

(56) Documents cités:
- WO-A2-92/22842
- US-A- 5 684 911

## Description

La présente invention a pour objet un boîtier de raccordement de fibres optiques, du type comprenant un corps de boîtier et un couvercle destiné à recouvrir le corps de boîtier, depuis au moins un câble principal vers au moins un câble secondaire. Le boîtier selon l'invention permet en particulier de conserver une très bonne étanchéité des câbles en cas d'interventions fréquentes dans le boîtier.

Parmi les techniques de raccordement de fibres optiques, on connaît la technique dite de piquage. Le piquage est une opération consistant à dériver une partie des fibres d'un câble pour les connecter à un autre câble.

Les techniques connues pour le raccordement en piquage sont de deux types.

Une première technique, telle que décrite par exemple dans le document FR 2 758 400, implique un passage des câbles par le plan de fermeture entre le corps de boîtier et le couvercle.

Une autre technique implique une entrée des câbles dans le boîtier à travers une fenêtre ouverte jusqu'au plan de fermeture. Au cours de l'installation, l'ouverture est obturée par une pièce intermédiaire qui reconstitue le corps du boîtier. Cette technique implique la gestion d'un triple point d'étanchéité entre le corps de boîtier, le câble et la pièce intermédiaire.

Ces deux techniques ont pour inconvénient que la réouverture du boîtier pour une maintenance sur des câbles secondaires peut détériorer l'étanchéité des câbles en piquage. Or, le développement récent des programmes FTTH, qui implique des interventions plus nombreuses dans les boîtiers de raccordement, accroît ce risque de défaut d'étanchéité. FTTH est l'abréviation du terme anglais « Fiber To The Home », signifiant littéralement en français « fibre jusqu'au foyer ». Il s'agit du nom d'une technologie visant à remplacer les technologies DSL (Digital Subscriber Line en langue anglaise) en installant de la fibre optique jusque chez l'abonné.

L'invention vise à remédier à ces problèmes d'étanchéité.

L'invention a ainsi pour objet un boîtier de raccordement de fibres optiques depuis au moins un câble principal vers au moins un câble secondaire, le boîtier comprenant :
- un élément de support du câble principal,
- un corps de boîtier, apte à supporter des moyens de raccordement de fibres,
- un couvercle, apte à être en mis contact avec une zone de contact corps/couvercle du corps de boîtier, de manière à recouvrir le corps de boîtier et les moyens de raccordement de fibres.

Conformément à l'invention, l'élément de support est distinct du corps de boîtier et est fixable sur le corps de boîtier. En outre, le corps de boîtier comprend une ouverture distincte de l'ouverture délimitée par la zone de contact et permettant le passage des fibres du câble principal vers les moyens de raccordement de fibres lorsque l'élément de support est fixé sur le corps de boîtier.

Ainsi, la présence dans le corps de boîtier d'une ouverture distincte de l'ouverture délimitée par la zone de contact corps/couvercle permet de dissocier l'étanchéité du câble principal de l'étanchéité entre le corps de boîtier et le couvercle.

Le couvercle peut être disposé sur le corps de boîtier et l'élément de support peut être disposé sous le corps de boîtier. On peut également envisager que l'élément de support soit disposé à côté du corps de boîtier.

Pour une fixation efficace, l'élément de support est de préférence clipsable sur le corps de boîtier.

Un matériau d'étanchéité, de préférence un matériau comprenant un gel élastomère, est avantageusement disposé autour d'au moins une portion non dégainée du câble principal, entre l'élément de support et le corps de boîtier.

Le corps de boîtier comprend de préférence une zone de support du câble secondaire. On peut ainsi dissocier l'étanchéité du câble secondaire de l'étanchéité du boîtier et de l'étanchéité du câble principal.

Pour assurer l'étanchéité du câble secondaire, la zone de support du câble secondaire peut comprendre un presse-étoupe.

Les moyens de raccordement de fibres peuvent comprendre au moins une cassette de lovage de fibres et de maintien d'épissures.

Le corps de boîtier et le couvercle sont de préférence reliés à l'aide de grenouillères, de manière à travailler sans gêne sur le boîtier.

L'invention a également pour objet l'utilisation d'un boîtier décrit ci-dessus pour le raccordement de fibres optiques en piquage.

D'autres caractéristiques et avantages de la présente invention apparaîtront plus clairement à la lecture de la description suivante donnée à titre d'exemple illustratif et non limitatif et faite en référence aux dessins annexés sur lesquels :
- la figure 1 est une vue en perspective éclatée d'un boîtier selon l'invention,
- la figure 2 est une vue en perspective de dessous du boîtier,
- la figure 3 est une vue partielle de dessus du boîtier, conformément à un premier mode de raccordement de fibres, et
- la figure 4 est une vue partielle de dessus du boîtier, conformément à un deuxième mode de raccordement de fibres.

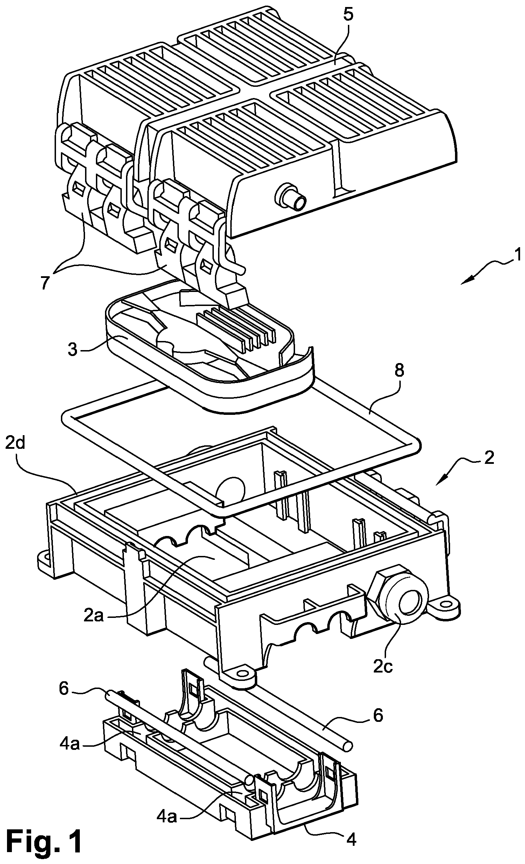

Le boîtier 1, tel qu'illustré à la figure 1, comprend :
- un corps de boîtier 2 supportant des cassettes 3 de lovage de fibres et de maintien d'épissures,
- un élément de support 4 du câble principal, et
- un couvercle 5 destiné à fermer le boîtier 1.

Le couvercle 5 est apte à être en mis contact avec une zone de contact 2d corps/couvercle du corps de boîtier 2, de manière à recouvrir le corps de boîtier 2 et les cassettes 3 de raccordement de fibres.

L'élément de support 4 du câble principal, de forme allongée, comprend une ou plusieurs zones longitudinales de réception de câble, destinées à recevoir un ou plusieurs câbles principaux. L'élément de support 4 peut comprendre un ou plusieurs logements 4a transversaux destinés à accueillir un matériau d'étanchéité, non représenté, avantageusement un gel élastomère. Le corps de boîtier 2 comprend avantageusement des logements similaires situés vis-à-vis des logements 4a de l'élément de support 4, ce qui permet d'entourer le câble principal d'un matériau d'étanchéité une fois que l'élément de support 4 est fixé sur le corps de boîtier 2.

L'élément de support 4 est clipsable sur le corps de boîtier 2. Il est disposé dans une cavité 2a formée dans la paroi inférieure et dans une partie des parois latérales du corps de boîtier 2, ce qui permet un gain de place dans le boîtier 1. Une fois que l'élément de support 4 est fixé sur le corps de boîtier 2, l'élément de support 4 et le corps de boîtier 2 forment une surface fermée.

La cavité 2a est distincte de l'ouverture délimitée par la zone de contact 2d. Il est ainsi possible de dissocier l'étanchéité du câble principal de l'étanchéité entre le corps de boîtier 2 et le couvercle 5. En particulier, la ou les zones d'étanchéité du câble principal, par exemple la ou les zones d'étanchéité (de contact) entre le câble principal et à la fois le corps de boîtier 2 et l'élément de support 4, sont distinctes de la zone d'étanchéité (de contact) entre le corps de boîtier 2 et le couvercle 5. La cavité 2a permet le passage des fibres du câble principal vers les cassettes 3 lorsque l'élément de support 4 est fixé sur le corps de boîtier 2.

Des joints 6 assurent l'étanchéité entre l'élément de support 4 et le corps de boîtier 2.

Le corps de boîtier 2 comprend en outre une zone de support 2b du câble secondaire, terminée par un presse-étoupe 2c, de manière à assurer l'étanchéité du câble secondaire. Le corps de boîtier 2 supporte deux cassettes 3 de lovage de fibres et de maintien d'épissures, chaque cassette 3 permettant de réaliser par exemple douze épissurages. Les cassettes 3 permettent de raccorder des fibres optiques depuis le ou les câbles principaux via la cavité 2a vers le ou les câbles secondaires via la cavité 2b.

Le couvercle 5 est relié au corps de boîtier 2 à l'aide de grenouillères 7 fixées sur le corps de boîtier 2 et clipsées sur le couvercle 5. Un joint 8 disposé sur la zone de contact 2d assure l'étanchéité entre le corps de boîtier 2 et le couvercle 5.

Une fois que le couvercle 5 est fermé, le boîtier 1 constitue une surface fermée, de forme par exemple sensiblement parallélépipédique. Le boîtier 1 est ainsi étanche à l'eau qui ne peut pas venir en contact avec la partie des câbles situées à l'intérieur du boîtier 1.

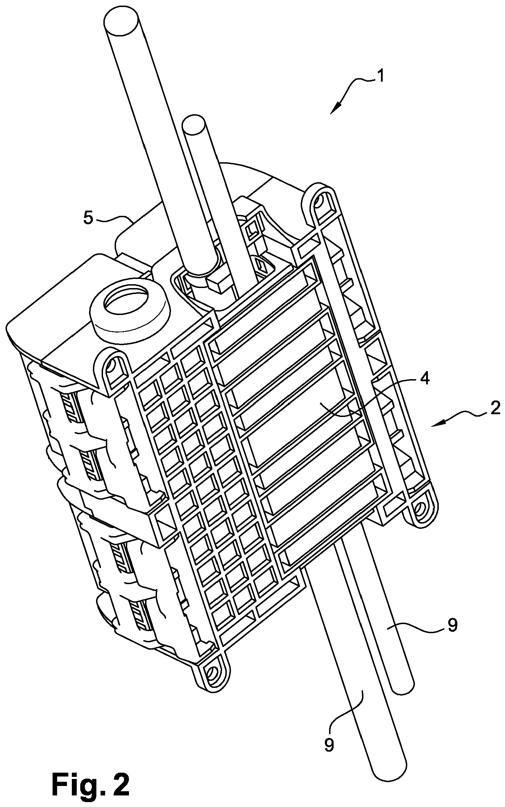

La figure 2, sur laquelle les éléments identiques à ceux de la figure 1 portent les mêmes références, est une vue de dessous du boîtier 1, en configuration opérationnelle du boîtier 1. Le boîtier 1 accueille deux câbles principaux 9 de diamètres différents.

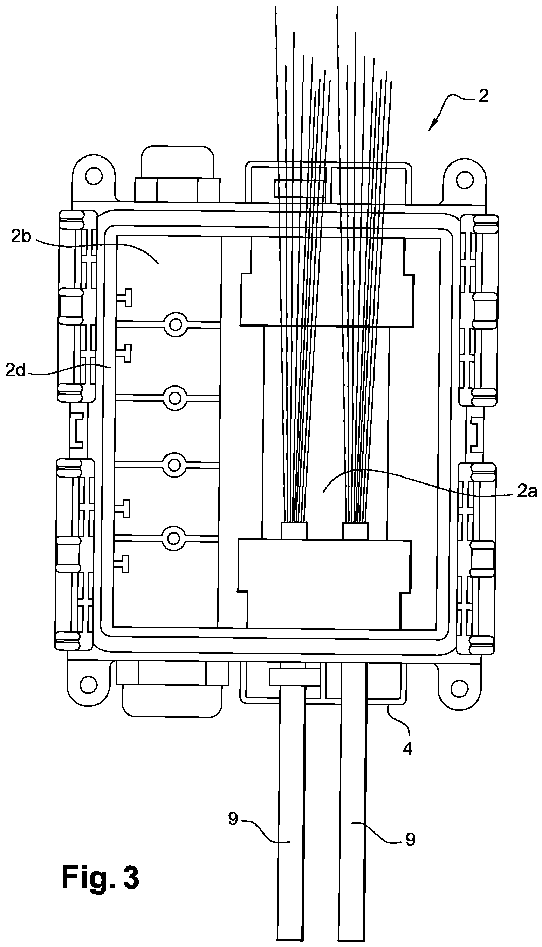

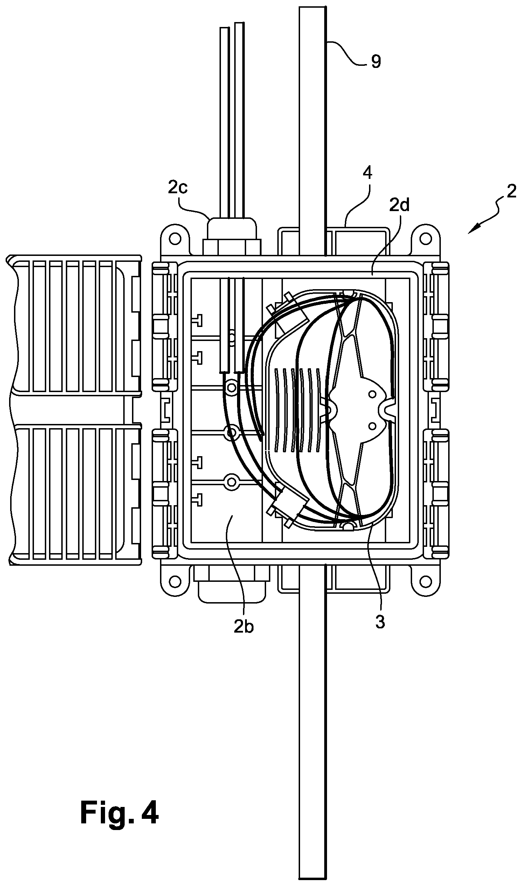

Les figures 3 et 4, sur lesquelles les éléments identiques à ceux des figures 1 et 2 portent les mêmes références, sont des vues partielles de dessus du boîtier 1 lors du raccordement de fibres.

La figure 3 illustre le boîtier 1 en phase de câblage. Deux câbles principaux 9, ou deux parties d'un même câble principal 9 dans le cas d'un piquage de fibres en épi, sont logés dans l'élément de support 4. Le câble 9 est dégainé à l'intérieur du boîtier 1 pour permettre la jonction des fibres.

La figure 4 illustre le raccordement de fibres optiques par piquage dit piquage droit. Dans ce mode de raccordement, le câble principal 9 traverse l'élément de support 4. Une partie des fibres du câble principal 9 est prélevée et dirigée vers la cassette 3 de lovage de fibres et de maintien d'épissures. Ces fibres sont ainsi raccordées dans la cassette 3 à des fibres d'un câble secondaire.

Le boîtier selon l'invention présente de nombreux avantages. La gestion séparée des entrées de câbles permet d'ouvrir le boîtier sans risque de dégrader l'étanchéité des câbles. Il permet également d'assurer une étanchéité simple entre le corps de boîtier et le couvercle. Le boîtier permet de réaliser tout type de piquage de fibres (piquage droit, tendu ou en épi) en dissociant l'étanchéité du câble principal de l'étanchéité entre le corps de boîtier et le couvercle.

## Revendications

1. Boîtier (1) de raccordement de fibres optiques depuis au moins un câble principal (9) vers au moins un câble secondaire, le boîtier (1) comprenant :
un élément de support (4) du câble principal (9),
des moyens (3) de raccordement de fibres du câble principal à au moins un câble secondaire, séparés de l'élément de support (4)
un corps de boîtier (2), configuré pour loger les moyens (3) de raccordement de fibres et présentant un bord (2d) délimitant une ouverture dans le corps du boitier,
un couvercle (5), apte à être en mis contact avec une zone de contact formée par le bord (2d) de la paroi du corps de boîtier (2), de manière à fermer le corps de boîtier (2) renfermant les moyens (3) de raccordement de fibres,
**caractérisé en ce que** la paroi du corps de boîtier (2) est configurée pour permettre la fixation de l'élément de support (4) de câble principal sur le corps de boîtier (2), à l'intérieur d'une cavité communiquant avec la cavité du boitier (1) dans laquelle les moyens (3) de raccordement de fibres sont logés, par une ouverture (2a) pratiquée dans ladite paroi et distincte de l'ouverture délimitée par la zone de contact (2d), ladite ouverture permettant le passage des fibres du câble principal (9) vers les moyens (3) de raccordement de fibres lorsque l'élément de support (4) de câble principal est fixé sur le corps de boîtier (2), les deux cavités étant rendues étanches par des moyens d'étanchéité séparés situés, respectivement, au niveau de la zone de contact du couvercle et du bord de la paroi du corps du boitier et au niveau de la zone de contact de l'élément support de câble (4) et de la paroi du corps du boitier (2).

2. Boîtier (1) selon la revendication 1, **caractérisé en ce que** le couvercle (5) est disposé sur le corps de boîtier (2) et **en ce que** l'élément de support (4) est disposé sous le corps de boîtier (2).

3. Boîtier (1) selon la revendication 1 ou 2, **caractérisé en ce que** l'élément de support (4) est clipsable sur le corps de boîtier (2).

4. Boîtier (1) selon l'une des revendications 1 à 3, **caractérisé en ce qu'**un matériau d'étanchéité comprenant un gel élastomère est disposé autour d'au moins une portion non dégainée du câble principal (9), entre l'élément de support (4) et le corps de boîtier (2).

5. Boîtier (1) selon l'une des revendications 1 à 4, **caractérisé en ce que** le corps de boîtier (2) comprend une zone de support (2b) du câble secondaire

6. Boîtier (1) selon l'une des revendications 1 à 5, **caractérisé en ce que** la zone de support (2b) du câble secondaire comprend un presse-étoupe (2c).

7. Boîtier (1) selon l'une des revendications 1 à 6, **caractérisé en ce que** les moyens (3) de raccordement de fibres comprennent au moins une cassette (3) de lovage de fibres et de maintien d'épissures.

8. Boîtier (1) selon l'une des revendications 1 à 7, **caractérisé en ce que** le corps de boîtier (2) et le couvercle (5) sont reliés à l'aide de grenouillères (7).

9. Utilisation d'un boîtier (1) selon l'une des revendications 1 à 8 pour le raccordement de fibres optiques en piquage.

## Patentansprüche

1. Verbindungsgehäuse (1) optischer Fasern ab mindestens einem Hauptkabel (9) zu mindestens einem sekundären Kabel, wobei das Gehäuse (1) umfasst:
ein Stützelement (4) des Hauptkabels (9),
Faserverbindungsmittel (3) des Hauptkabels mit mindestens einem sekundären Kabel, die von dem Stützelement (4) getrennt sind,
einen Gehäusekörper (2), der konfiguriert ist, um die Faserverbindungsmittel (3) aufzunehmen und der einen Rand (2d) aufweist, der eine Öffnung in dem Gehäusekörper begrenzt,
einen Deckel (5), der imstande ist, mit einer vom Rand (2d) der Wand des Gehäusekörpers (2) gebildeten Kontaktzone derart in Kontakt versetzt zu sein, dass der Gehäusekörper (2), der die Faserverbindungsmittel (3) einschließt, verschlossen ist,
**dadurch gekennzeichnet, dass** die Wand des Gehäusekörpers (2) konfiguriert ist, um die Befestigung des Hauptkabel-Stützelements (4) auf dem Gehäusekörper (2) im Innern eines Hohlraums zu erlauben, der mit dem Hohlraum des Gehäuses (1) kommuniziert, in welchem die Faserverbindungsmittel (3) untergebracht sind, durch eine in die Wand eingearbeitete Öffnung (2a), die sich von der von der Kontaktzone (2d) begrenzten Öffnung unterscheidet, wobei die Öffnung den Durchgang der Fasern des Hauptkabels (9) zu den Faserverbindungsmitteln (3) erlaubt, wenn das Hauptkabel-Stützelement (4) auf dem Gehäusekörper (2) befestigt ist, wobei die zwei Hohlräume mit Hilfe getrennter Dichtungsmittel abgedichtet sind, die sich jeweils im Bereich der Kontaktzone des Deckels und des Randes der Wand des Gehäusekörpers und im Bereich der Kontaktzone des Kabel-Stützelements (4) und der Wand des Gehäusekörpers (2) befinden.

2. Gehäuse (1) nach Anspruch 1, **dadurch gekennzeichnet, dass** der Deckel (5) auf dem Gehäusekörper (2) angeordnet ist und dass das Stützelement (4) unter dem Gehäusekörper (2) angeordnet ist.

3. Gehäuse (1) nach Anspruch 1 oder 2, **dadurch gekennzeichnet, dass** das Stützelement (4) auf den Gehäusekörper (2) klipsbar ist.

4. Gehäuse (1) nach einem der Ansprüche 1 bis 3, **dadurch gekennzeichnet, dass** ein Dichtungsmaterial, das ein Elastomergel umfasst, um mindestens einen nicht enthülsten Abschnitt des Hauptkabels (9) zwischen dem Stützelement (4) und dem Gehäusekörper (2) angeordnet ist.

5. Gehäuse (1) nach einem der Ansprüche 1 bis 4, **dadurch gekennzeichnet, dass** der Gehäusekörper (2) eine Stützzone (2b) des sekundären Kabels umfasst.

6. Gehäuse (1) nach einem der Ansprüche 1 bis 5, **dadurch gekennzeichnet, dass** die Stützzone (2b) des sekundären Kabels eine Stopfbuchse (2c) umfasst.

7. Gehäuse (1) nach einem der Ansprüche 1 bis 6, **dadurch gekennzeichnet, dass** die Faserverbindungsmittel (3) mindestens eine Faseraufschuss- und Spleißungshaltekassette (3) umfassen.

8. Gehäuse (1) nach einem der Ansprüche 1 bis 7, **dadurch gekennzeichnet, dass** der Gehäusekörper (2) und der Deckel (5) mit Hilfe von Schnallen (7) verbunden sind.

9. Verwendung eines Gehäuses (1) nach einem der Ansprüche 1 bis 8 für die Verbindung optischer Fasern durch Klemmen.

## Claims

1. A box (1) for connecting optical fibers from at least one primary cable (9) to at least one secondary cable, the box (1) comprising:
a support element (4) of the primary cable (9),
means (3) for connecting fibers from the primary cable to at least one secondary cable, separated by the support element (4),
a box body (2), configured to house the means (3) for connecting fibers and having an edge (2d) defining an opening in the body of the box,
a cover (5), able to be placed in contact with a contact area formed by the edge (2d) of the wall of the box body (2), so as to close the box body (2) containing the fiber connecting means (3),
**characterized in that** the wall of the box body (2) is configured to allow the fastening of the primary cable support element (4) on the box body (2), inside a cavity communicating with the cavity of the box (1) in which the fiber connecting means (3) are housed, through an opening (2a) formed in said wall and separate from the opening defined by the contact area (2d), said opening allowing the passage of the fibers from the primary cable (9) toward the fiber connecting means (3) when the primary cable support element (4) is fastened on the box body (2), the two cavities being made sealed by separate sealing and means respectively situated at the contact area of the cover and the edge of the wall of the body of the box and at the contact area of the cable support element (4) and the wall of the body of the box (2).

2. The box (1) according to claim 1, **characterized in that** the cover (5) is arranged on the box body (2) and **in that** the support element (4) is arranged below the box body (2).

3. The box (1) according to claim 1 or 2, **characterized in that** the support element (4) is able to be clipped on the box body (2).

4. The box (1) according to one of claims 1 to 3, **characterized in that** a sealing material comprising an elastomeric gel is arranged around at least one non-stripped portion of the primary cable (9), between the support element (4) and the box body (2).

5. The box (1) according to one of claims 1 to 4, **characterized in that** the box body (2) comprises a support zone (2b) of the secondary cable.

6. The box (1) according to one of claims 1 to 5, **characterized in that** the support zone (2b) of the secondary cable comprises a cable gland (2c).

7. The box (1) according to one of claims 1 to 6, **characterized in that** the fiber connecting means (3) comprise at least one fiber coiling and splice maintaining cassette (3).

8. The box (1) according to one of claims 1 to 7, **characterized in that** the box body (2) and the cover (5) are connected using toggles (7).

9. A use of a box (1) according to one of claims 1 to 8 for connecting optical fibers by tapping.
